# EUROPÄISCHE PATENTSCHRIFT

(11) **EP 0 932 940 B1**
(45) Veröffentlichungstag und Bekanntmachung des Hinweises auf die Patenterteilung: **31.05.2000**
(21) Anmeldenummer: 97945747.0
(22) Anmeldetag: 14.10.1997
(51) Int. Cl.: H04B 1/20, H04B 1/38, H04M 1/72, G11B 31/00

(54) **RUNDFUNKEMPFÄNGER MIT EINER AUFZEICHNUNGSEINHEIT**
RADIO RECEIVER WITH A RECORDING UNIT
RECEPTEUR RADIO COMPRENANT UNE UNITE D'ENREGISTREMENT

(30) Priorität: 15.10.1996 DE 19642524
(43) Veröffentlichungstag der Anmeldung: 04.08.1999
(73) Patentinhaber: ROBERT BOSCH GMBH, 70442 Stuttgart (DE)
(72) Erfinder: MENZEL, Thomas, D-31188 Holle (DE)
(86) Internationale Anmeldenummer: DE9702342
(87) Internationale Veröffentlichungsnummer: WO9817009

(56) Entgegenhaltungen:
- DE-A- 3 726 784
- DE-A- 4 136 802
- GB-A- 2 254 524

## Beschreibung

### Stand der Technik

Die Erfindung geht von einem Rundfunkempfänger mit einer Aufzeichnungseinheit nach der Gattung des Hauptanspruchs aus. Aus der DE 37 21 279 A1 ist eine Schaltungsanordnung für Rundfunkempfänger bekannt, bei der eine Speichereinheit vorgesehen ist, welche vom Rundfunkempfänger aufgefangene Informationen aufbereitet, digital abspeichert und auf Wunsch beliebig oft wiederholt.

Aus der DE 41 36 802 A1 ist ein Autoradio mit einem Empfängersystem, einer Steuereinheit und einem Verstärker-und Lautsprechersystem bekannt, bei welchem Mittel zum Empfangen von Verkehrsfunksignalen vorgesehen sind. Bei dem Autoradio sind zusätzliche Sprachspeichermittel mit Mitteln zum Speichern und Abfragen von gesprochenen Information vorgesehen. Dadurch können Verkehrsfunkmeldungen gespeichert und bei Bedarf jederzeit abgefragt werden. Die auf diese Weise sowieso vorhandenen Speichermittel können zu einem weiteren Zweck benutzt werden, indem die Speichermittel weiterhin Mittel zum Abspeichern von Sprachinformationen enthalten, die mittels einer akustischen Eingabeeinheit eingebbar sind.

Aus der GB 2 254 524 A ist ein Mobiltelefon mit Anrufbeantworter bekannt. Voraufgezeichnete und eingehende Meldungen werden in einem Speicher des Mobiltelefons gespeichert.

### Vorteile der Erfindung

Der erfindungsgemäße Rundfunkempfänger mit den Merkmalen des Hauptanspruchs hat demgegenüber den Vorteil, daß die Aufzeichnungseinheit nicht nur zur Aufzeichnung von Rundfunksignalen, sondern auch zur Aufzeichnung eines an einer Sprecheinrichtung eingegebenen Ansagetextes dient. Auf diese Weise kann die Aufzeichnungseinheit vielfältiger eingesetzt werden, so daß zur Speicherung eines Ansagetextes keine eigene Speichervorrichtung erforderlich ist und auf diese Weise Platz, Kosten und Aufwand eingespart werden können.

Durch die in den Unteransprüchen aufgeführten Maßnahmen sind vorteilhafte Weiterbildungen und Verbesserungen des im Hauptanspruch angegebenen Rundfunkempfängers möglich.

Vorteilhaft ist dabei besonders die Integration einer Fernsprecheinheit in den Rundfunkempfänger, die mit der Aufzeichnungseinheit verbunden ist und die bei einem eingehenden Ruf ein Aufforderungssignal an die Aufzeichnungseinheit abgibt, wenn der Ruf nicht angenommen wird, wobei die Aufzeichnungseinheit nach Erhalt des Aufforderungssignals den Ansagetext an die Fernsprecheinheit zur Weiterleitung an den rufenden Teilnehmer übermittelt. Auf diese Weise kann die Aufzeichnungseinheit zusätzlich als Anrufbeantworter verwendet werden, wofür dann keine separate Speichereinheit, wie beispielsweise der Mobilbox im D-Netz für die Ausbildung der Fernsprecheinheit als Mobiltelefon erforderlich ist und dadurch neben Platz, Kosten und Aufwand auch Gebühren durch Nichtbenutzung einer solchen Mobilbox eingespart werden können.

Besonders vorteilhaft ist auch die zumindest teilweise Abspeicherung von mit der Fernsprecheinheit durchgeführten Gesprächen in der Aufzeichnungseinheit. Auf diese Weise wird eine weitere Erhöhung der Funktionalität der Aufzeichnungseinheit ohne nennenswerten Zusatzaufwand bewirkt.

Vorteilhaft ist ferner die Zuführung der Rundfunksignale zur Aufzeichnungseinheit über die Fernsprecheinheit, wodurch dort eine Digitalisierung und Datenreduktion der der Aufzeichnungseinheit zugeführten Rundfunksignale ermöglicht wird. Auf diese Weise sind keine zusätzlichen Einrichtungen zur Digitalisierung und Datenreduktion der der Aufzeichnungseinheit zuzuführenden Rundfunksignale erforderlich, so daß wiederum Aufwand, Platz und Kosten gespart werden. Aufgrund der Datenreduktion lassen sich in vorteilhafter Weise mehr Informationen in der Aufzeichnungseinheit abspeichern.

Eine weitere vorteilhafte Platzersparnis ergibt sich durch Integration der Aufzeichnungseinheit in die Fernsprecheinheit.

Von Vorteil ist auch die Mitbenutzung der Tonwiedergabeeinheit des Rundfunkempfängers für die Wiedergabe des Speicherinhalts der Aufzeichnungseinheit. Auf diese Weise ist keine separate Tonwiedergabeeinheit erforderlich, wodurch wiederum Aufwand, Platz und Kosten eingespart werden.

### Zeichnung

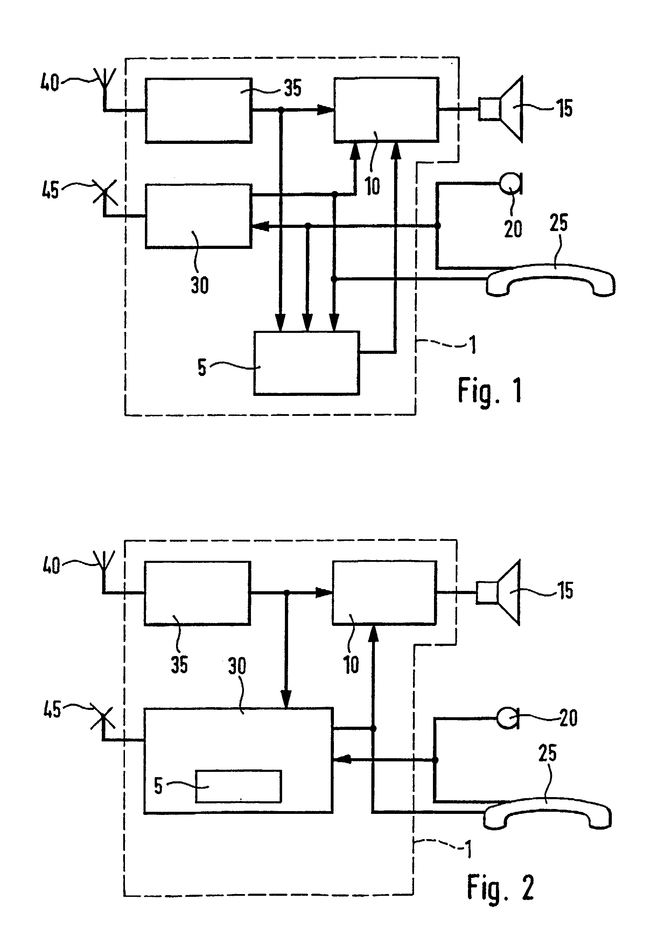

Ausführungsbeispiele der Erfindung sind in der Zeichnung dargestellt und in der nachfolgenden Beschreibung näher erläutert. Es zeigen Figur 1 einen Rundfunkempfänger mit einer Fernsprecheinheit und einer separaten Aufzeichnungseinheit und Figur 2 einen Rundfunkempfänger mit einer Fernsprecheinheit, in die eine Aufzeichnungseinheit integriert ist.

### Beschreibung des Ausführungsbeispiels

In Figur 1 kennzeichnet 1 einen Rundfunkempfänger, der ein Rundfunkmodul 35, eine Fernsprecheinheit 30, eine Aufzeichnungseinheit 5 und einen Niederfrequenzverstärker 10 umfaßt. Dem Rundfunkmodul 35 werden Rundfunksignale über eine Empfangsantenne 40 zugeführt. Nach Verarbeitung der empfangenen Rundfunksignale und deren Umsetzung in Niederfrequenzsignale im Rundfunkmodul 35 werden die niederfrequenten Rundfunksignale direkt über den Niederfrequenzverstärker 10 an eine beispielsweise aus mindestens einem Lautsprecher bestehende Tonwiedergabeeinheit 15 weitergeleitet und /oder der Aufzeichnungseinheit 5 zugeführt. Bei den der Aufzeichnungseinheit 5 zugeführten Rundfunksignalen handelt es sich vornehmlich um Verkehrsfunksignale, die bereits im Rundfunkmodul 35 detektiert werden. Es ist aber auch denkbar, andere, keine Verkehrsinformationen enthaltende Rundfunksignale von dem Rundfunkmodul 35 an die Aufzeichnungseinheit 5 weiterzuleiten. Vor Abspeicherung der Rundfunksignale in der Aufzeichnungseinheit 5 sind diese zu digitalisieren, sofern nicht bereits digitale Rundfunksignale über die Empfangsantenne 40 empfangen wurden. Eine entsprechende Analog-/Digitalwandlung kann dann beispielsweise in der Aufzeichnungseinheit 5, im Rundfunkmodul 35, oder zwischen Rundfunkmodul 35 und Aufzeichnungseinheit 5 erfolgen. Über eine an die Fernsprecheinheit 30 angeschlossene Sende-/Empfangsantenne 45 werden der Fernsprecheinheit 30 vorzugsweise digitale Fernsprechsignale zugeführt. Bei Zuführung von analogen Fernsprechsignalen findet in der Fernsprecheinheit 30 zusätzlich eine Analog-/Digitalwandlung der empfangenen Fernsprechdaten statt. Die digitalen oder digitalisierten Fernsprechsignale werden in der Fernsprecheinheit 30 einer Datenreduktion unterworfen und anschließend über den Niederfrequenzverstärker 10 an die Tonwiedergabeeinheit 15 weitergeleitet und/oder der Aufzeichnungseinheit 5 zugeführt und/oder zur akustischen Wiedergabe an einen Handapparat 25 abgegeben. Der Handapparat 25 ist außerdem mit der Aufzeichnungseinheit 5 verbunden, so daß nach einer Digitalisierung von in den Handapparat 5 eingegebenen Ton-bzw. Sprachsignalen im Handapparat 25, in der Aufzeichnungseinheit 5, oder zwischen dem Handapparat 25 und der Aufzeichnungseinheit 5 diese Ton- bzw. Sprachsignale in der Aufzeichnungseinheit 5 beispielsweise als Ansagetext oder Teil eines Telefongespräches abgespeichert werden können. Weiterhin können Ton- bzw. Sprachsignale von dem Handapparat 25 auch direkt an die Fernsprecheinheit 30 abgegeben, gegebenenfalls digitalisiert und über die Sende/Empfangsantenne 45 abgestrahlt werden. Zur Eingabe von Ton-bzw. Sprachsignalen eignet sich in analoger Weise ein Freisprechmikrophon 20, das ebenfalls an die Fernsprecheinheit 30 und die Aufzeichnungseinheit 5 sowie an den Handapparat 25 angeschlossen ist. Die Aufzeichnungseinheit 5 ist schließlich mit dem Niederfrequenzverstärker 10 verbunden, wobei vor Ausgabe von Signalen an den Niederfrequenzverstärker 10 vorzugsweise in der Aufzeichnungseinheit 5 eine Digital-/Analogwandlung der abzugebenden Signale erfolgt.

Bei dem beschriebenen Ausführungsbeispiel läßt sich die Aufzeichnungseinheit 5 als Speicher für Verkehrsmeldungen, als Anrufbeantworter und zur Aufzeichnung von Telefongesprächen verwenden. Bei der Verwendung als Anrufbeantworter wird ein Ansagetext über das Freisprechmikrophon 20 und/oder das Mikrophon des Handapparates 25 nach Digitalisierung in der Aufzeichnungseinheit 5 abgespeichert. Bei einem in die Fernsprecheinheit 30 eingehenden Ruf gibt die Fernsprecheinheit 30 ein Aufforderungssignal an die Aufzeichnungseinheit 5 ab, wenn der eingehende Ruf nicht entgegengenommen wird. Nach Empfang des Aufforderungssignals gibt dann die Aufzeichnungseinheit 5 den Ansagetext an die Fernsprecheinheit 30 ab, von wo dieser Ansagetext dann über die Sende-/Empfangsantenne 45 und ein entsprechendes Telekommunikationsnetz an den rufenden Teilnehmer übermittelt wird. In der Aufzeichnungseinheit 5 gespeicherte Daten können über die Tonwiedergabeeinheit 15 wiedergegeben werden.

In Figur 2 ist ein weiteres Ausführungsbeispiel der Erfindung dargestellt, wobei die gleichen Baugruppen wie in Figur 1 vorgesehen und mit dem jeweils gleichen Bezugszeichen gekennzeichnet sind, sich jedoch teilweise in ihrer Anordnung von dem in Figur 1 dargestellten Ausführungsbeispiel unterscheiden. So ist die Aufzeichnungseinheit 5 gemäß Figur 2 in der Fernsprecheinheit 30 integriert, und die Rundfunksignale werden der Aufzeichnungseinheit 5 somit über die Fernsprecheinheit 30 zugeführt. Weiterhin können aufgrund der Integration der Aufzeichnungseinheit 5 in die Fernsprecheinheit 30 die Verbindungsleitungen zwischen der Fernsprecheinheit 30 und der Aufzeichnungseinheit 5 weggelassen werden, da diese Zuleitungen nun innerhalb der Fernsprecheinheit 30 realisiert sind. Die Funktion ist dieselbe wie gemäß Figur 1, jedoch lassen sich einige Verbesserungen erzielen. So kann ein in der Fernsprecheinheit 30 vorgesehener Analog-/Digitalwandler zur Digitalisierung von empfangenen Fernsprechsignalen und/oder über das Freisprechmikrophon 20 und/oder das Mikrophon des Handapparates 25 eingegebenen Ton- bzw. Sprachsignalen auch zur Digitalisierung von Rundfunksignalen mitbenutzt werden. Gleichfalls können Vorrichtungen zur Datenreduktion in der Fernsprecheinheit 30 für empfangene Fernsprechsignale und/oder Ton- bzw. Sprachsignale von dem Freisprechmikrophon 20 und/oder dem Mikrophon des Handapparates 25 auch für die zu speichernden Rundfunksignale mitgenutzt werden. Auf diese Weise ist für die zu speichernden Rundfunksignale kein zusätzlicher Analog-/Digitalwandler erforderlich und durch die Datenreduktion auch der zu speichernden Rundfunksignale können mehr Informationen in der Aufzeichnungseinheit 5 abgespeichert werden. Vorteilhaft bei der Ausführungsform gemäß Figur 1 hingegen ist die Möglichkeit, während eines Telefonats Rundfunksignale, insbesondere Verkehrsfunkinformationen zu speichern, ohne in die Fernsprech-Signalverarbeitung einzugreifen bzw. ein Telefongespräch zu stören, da gemäß dem Ausführungsbeispiel nach Figur 1 keine gemeinsame digitale Signalverarbeitung für die Rundfunk- und die Fernsprechsignale erfolgt.

In einem weiteren nicht dargestellten Ausführungsbeispiel ist es auch möglich, die Fernsprecheinheit 30 nicht in dem Rundfunkempfänger 1 zu integrieren, sondern extern an den Rundfunkempfänger 1 anzuschließen. Dabei kann die Aufzeichnungseinheit 5 gemäß dem Ausführungsbeispiel nach Figur 1 in dem Rundfunkempfänger 1 verbleiben oder gemäß dem Ausführungsbeispiel nach Figur 2 in die Fernsprecheinheit 30 integriert sein. Die Abspeicherung von Rundfunk- und Fernsprechsignalen erfolgt dann in der oben beschriebenen Weise.

## Patentansprüche

1. Rundfunkempfänger (1) mit einer Aufzeichnungseinheit (5) für eingehende Rundfunksignale, insbesondere für Verkehrsfunksignale, und einem mit der Aufzeichnungseinheit (5) verbundenen Niederfrequenzverstärker (10), an den eine Tonwiedergabeeinheit (15) angeschlossen ist, dadurch gekennzeichnet, daß die Aufzeichnungseinheit (5) mit einer Sprecheinrichtung (20, 25) einer Fernsprecheinheit (30), vorzugsweise einem Freisprechmikrophon (20) und/oder einem Handapparat (25), verbunden ist und daß über die Sprecheinrichtung (20, 25) in der Aufzeichnungseinheit (5) ein Ansagetext abspeicherbar ist.

2. Rundfunkempfänger (1) nach Anspruch 1, dadurch gekennzeichnet, daß die Aufzeichnungseinheit (5) einen abgespeicherten Ansagetext nach Erhalt eines Aufforderungssignals abgibt.

3. Rundfunkempfänger (1) nach Anspruch 1 oder 2, dadurch gekennzeichnet, daß die Fernsprecheinheit (30) bei einem eingehenden Ruf ein Aufforderungssignal an die Aufzeichnungseinheit (5) abgibt, wenn der Ruf nicht angenommen wird und daß die Aufzeichnungseinheit (5) nach Erhalt des Aufforderungssignals den Ansagetext an die Fernsprecheinheit (30) zur Weiterleitung an den rufenden Teilnehmer übermittelt.

4. Rundfunkempfänger (1) nach Anspruch 3, dadurch gekennzeichnet, daß mit der Fernsprecheinheit (30) durchgeführte Gespräche zumindest teilweise in der Aufzeichnungseinheit (5) abspeicherbar sind.

5. Rundfunkempfänger (1) nach Anspruch 3 oder 4, dadurch gekennzeichnet, daß die Rundfunksignale der Aufzeichnungseinheit (5) über die Fernsprecheinheit (30) zugeführt sind.

6. Rundfunkempfänger (1) nach Anspruch 5, dadurch gekennzeichnet, daß in der Fernsprecheinheit (30) eine Digitalisierung von der Aufzeichnungseinheit (5) zugeführten Signalen, insbesondere von zugeführten Rundfunksignalen erfolgt.

7. Rundfunkempfänger (1) nach Anspruch 6, dadurch gekennzeichnet, daß in der Fernsprecheinheit (30) eine Datenreduktion von der Aufzeichnungseinheit (5) zugeführten Signalen, insbesondere von zugeführten Rundfunksignalen erfolgt.

8. Rundfunkempfänger (1) nach einem der Ansprüche 3 bis 7, dadurch gekennzeichnet, daß die Aufzeichnungseinheit (5) in die Fernsprecheinheit (30) integriert ist.

9. Rundfunkempfänger (1) nach einem der vorherigen Ansprüche, dadurch gekennzeichnet, daß der Speicherinhalt der Aufzeichnungseinheit (5) über den Niederfrequenzverstärker (10) an der Tonwiedergabeeinheit (15) wiedergebbar ist.

## Claims

1. Radio receiver (1) having a recording unit (5) for incoming radio signals, particularly for traffic radio signals, and a low-frequency amplifier (10) which is connected to the recording unit (5) and has a sound reproduction unit (15) connected to it, characterized in that the recording unit (5) is connected to a talking facility (20, 25) of a telephone unit (30), preferably a hands-free microphone (20) and/or a handset (25), and in that a recorded announcement can be stored in the recording unit (5) using the talking facility (20, 25).

2. Radio receiver (1) according to Claim 1, characterized in that the recording unit (5) outputs a stored recorded announcement when a request signal has been received.

3. Radio receiver (1) according to Claim 1 or 2, characterized in that, when there is an incoming call, the telephone unit (30) outputs a request signal to the recording unit (5) if the call is not accepted, and in that the recording unit (5), having received the request signal, transmits the recorded announcement to the telephone unit (30) for forwarding to the calling subscriber.

4. Radio receiver (1) according to Claim 3, characterized in that conversations held using the telephone unit (30) can be at least partly stored in the recording unit (5).

5. Radio receiver (1) according to Claim 3 or 4, characterized in that the radio signals are supplied to the recording unit (5) via the telephone unit (30).

6. Radio receiver (1) according to Claim 5, characterized in that signals supplied to the recording unit (5), particularly supplied radio signals, are digitized in the telephone unit (30).

7. Radio receiver (1) according to Claim 6, characterized in that data reduction is performed on signals supplied to the recording unit (5), particularly on supplied radio signals, in the telephone unit (30).

8. Radio receiver (1) according to one of Claims 3 to 7, characterized in that the recording unit (5) is integrated in the telephone unit (30).

9. Radio receiver (1) according to one of the preceding claims, characterized in that the memory content of the recording unit (5) can be played back on the sound reproduction unit (15) via the low-frequency amplifier (10).

## Revendications

1. Récepteur radio (1) comportant une unité d'enregistrement (5) pour des signaux radio d'entrée, notamment des signaux de circulation routière, et un amplificateur basse fréquence (10) relié à l'unité d'enregistrement (5), ainsi qu'une unité de reproduction de son (15) reliée à cet amplificateur basse fréquence,
caractérisé en ce que
- l'unité d'enregistrement (5) est reliée à une installation vocale (20, 25) d'une unité téléphonique (30), de préférence un micro mains libres (20), et/ou un combiné (25) et,
- un texte annonce peut être enregistré dans l'unité d'enregistrement (5) par l'installation vocale (20, 25).

2. Récepteur radio (1) selon la revendication 1,
caractérisé en ce que
l'unité d'enregistrement (5) émet un texte annonce mémorisé, après réception d'un signal de requête.

3. Récepteur radio (1) selon la revendication 1 ou 2,
caractérisé en ce que
- l'unité téléphonique (30) émet, en cas d'un appel incident, un signal de requête à l'unité d'enregistrement (5) si l'appel n'a pas été accepté et,
- l'unité d'enregistrement (5), après réception du signal de requête, transmet le texte annonce à l'unité téléphonique (30) pour qu'elle le transmette à l'abonné appelant.

4. Récepteur radio (1) selon la revendication 3,
caractérisé en ce que
des conversations faites avec l'unité téléphonique (30), peuvent au moins être en partie mémorisées sans l'unité d'enregistrement (5).

5. Récepteur radio (1) selon la revendication 3 ou 4,
caractérisé en ce que
les signaux radio de l'unité d'enregistrement (5) sont transmis par l'unité téléphonique (30).

6. Récepteur radio (1) selon la revendication 5,
caractérisé en ce que
l'unité téléphonique (30) numérise les signaux fournis par l'unité d'enregistrement (5), notamment les signaux radio.

7. Récepteur radio (1) selon la revendication 6,
caractérisé en ce que
l'unité téléphonique (30) effectue une réduction des données des signaux fournis par l'unité d'enregistrement (5), notamment des signaux radio fournis.

8. Récepteur radio (1) selon les revendications 3 à 7,
caractérisé en ce que
l'unité d'enregistrement (5) est intégrée dans l'unité téléphonique (30).

9. Récepteur radio (1) selon l'une quelconque des revendications,
caractérisé en ce que
le contenu de la mémoire de l'unité d'enregistrement (5) se reproduit dans l'unité de reproduction de son (15) par l'intermédiaire de l'amplificateur basse fréquence (10).
